# EUROPÄISCHE PATENTSCHRIFT

(11) **EP 2 180 586 B1**
(45) Veröffentlichungstag und Bekanntmachung des Hinweises auf die Patenterteilung: **19.10.2011**
(21) Anmeldenummer: 08167670.2
(22) Anmeldetag: 27.10.2008
(51) Int. Cl.: H02M 3/335

(54) **Umrichterschaltung sowie Einheit und System mit einer solchen Umrichterschaltung**
Converter circuit and unit and system with such a converter circuit
Circuit convertisseur ainsi qu'unité et système dotés d'un tel circuit convertisseur

(43) Veröffentlichungstag der Anmeldung: 28.04.2010
(73) Patentinhaber: ABB Research Ltd., 8050 Zürich (CH)
(72) Erfinder: Coccia, Antonio, 5400 Baden (CH); Canales, Francisco, 5405 Baden-Dättwil (CH); Winkelnkemper, Manfred, 5408 Ennetbaden (CH); Pellerin, Marc, 1110 Morges (CH); Hugo, Nicolas, 1201 Genève (CH); Stefanutti, Philippe, 74330 Choisy (FR); Chaudhuri, Toufann, 1260 Nyon (CH)
(74) Vertreter: ABB Patent Attorneys

(56) Entgegenhaltungen:
- DE-A1- 10 204 219
- DE-A1- 19 827 872
- DE-A1-102005 036 806
- US-B1- 6 344 979

## Beschreibung

### Technisches Gebiet

Die Erfindung bezieht sich auf das Gebiet der Leistüngselektronik. Sie geht aus von einer Umrichterschaltung, einer Umrichtereinheit und einem System mit einer solchen Umrichterschaltung gemäss dem Oberbegriff der unabhängigen Ansprüche.

### Stand der Technik

In vielen Anwendungen vor allem im Industriebereich und in Traktionsanwendungen, so beispielsweise im Bahnbereich, findet ein Energieaustausch zwischen den angeschlossenen Verbrauchern und Erzeugern mittels Wechselspannung und Wechselstrom und Gleichspannung und Gleichstrom statt. Bei vielen Anwendungen wird dabei eine andere feste Frequenz oder auch eine variable Frequenz benötigt. Dabei wird sowohl Energie vom Energieerzeuger zum Verbraucher als auch in umgekehrter Richtung geleitet, wofür heute Umrichterschaltungen eingesetzt werden. Eine Umrichterschaltung zur Umsetzung einer Wechselspannung in eine zweite Wechselspannung ist beispielsweise in der DE 198 27 872 angegeben. Darin umfasst die Umrichterschaltung einen eingangsseitigen Gleichrichter und einen dem Gleichrichter ausgangsseitig nachgeschalteten kapazitiven Energiespeicherkreis und Wechselrichter. Der Wechselrichter ist ausgangsseitig mit der Primärseite eines Transformators verbunden. In Reihe zur Primär- bzw. Sekundärwicklung des Transformators liegt jeweils eine Kapazität. Weiterhin ist die Sekundärseite des Transformators mit ein weiteren Wechselrichter welchem eine weiterer kapazitiver Energiespeicherkreis nachgeschaltet ist, verbunden. Der Umrichter wird derart angesteuert, dass mittels der kapazitiven Energiespeicher, die zum Transformator in Reihe geschalteten Kapazitäten und die Streuinduktivität des Transformators ausgangsseitig an die kapazitiven Energiespeicher eine entsprechende Wechselspannung durch Takten der Gleichspannung am eingangseitigen Wechselrichter, erreicht wird.

Als problematisch zeigt sich bei einer vorstehend genannten Umrichterschaltung, dass es trotz des vorhandenen Resonanzschwingkreises weiterhin zu Schaltverlusten in den Leistungshalbleiterschaltern des Umrichters kommen kann, welche diese, insbesondere thermisch, stark belasten. Dadurch altern die Leistungshalbleiterschalter entsprechend schnell und die Ausfallraten der Leistungshalbleiterschalter steigen mit der Betriebsdauer der Unrichterschaltung an. Eine hohe Verfügbarkeit der Umrichterschaltung, wie sie beispielsweise bei Traktionsanwendungen unabdingbar ist, ist dann nicht mehr gewährleistet.

Weiterhin werden in US 6344979B1, DE102005036806A1 und DE10204219A1 gattungsgemässe Umrichterschaltungen offenbart.

### Darstellung der Erfindung

Aufgabe der Erfindung ist es deshalb, eine verbesserte Umrichterschaltung anzugeben, welche geringe Schaltverluste aufweist und ein weicheres Schalten, ein so genanntes "soft switching" ermöglicht. Eine weitere Aufgabe ist es, eine Einheit mit Umrichterschaltungen und ein System mit Umrichterschaltungen anzugeben, welches sich besonders einfach realisieren lässt. Diese Aufgaben werden durch die Merkmale des Ansprüche 1, 7 bzw. durch den Anspruch 10 gelöst. In den abhängigen Ansprüchen sind vorteilhafte Weiterbildungen der Erfindung angegeben.

Die erfindungsgemässe Umrichterschaltung umfasst einen ersten Energiespeicherkreis, einen Resonanzumrichter, einen Transformator, einen zweiten Resonanzumrichter, einen zweiten Energiespeicherkreis und einem Lastumrichter. Der zweite Resonanzumrichter ist eingangsseitig mit der Sekundärwicklung des Transformators verbunden ist, und eine mit dem ersten Resonanzumrichter und mit der Primärwicklung des Transformators verbundene CLL-Resonanzschaltung, welche CLL-Resonanzschaltung eine Resonanzkapazität, eine erste und eine zweite Resonanzinduktivität aufweist. Erfindungsgemäss ist die Resonanzkapazität seriell mit der ersten Resonanzinduktivität verbunden, wobei die erste Resonanzinduktivität mit einem ersten Verbindungspunkt der Primärwicklung des Transformators verbunden ist. Ferner ist die Resonanzkapazität mit dem ersten Resonanzumrichter verbunden und die zweite Resonanzinduktivität ist mit dem Verbindungspunkt der Resonanzkapazität mit der ersten Resonanzinduktivität verbunden, wobei die zweite Resonanzinduktivität mit einem zweiten Verbindungspunkt der Primärwicklung des Transformators verbunden ist und der zweite Verbindungspunkt der Primärwicklung des Transformators mit einem Verbindungspunkt des ersten Energiespeicherkreises verbunden ist. Die CLL-Resonanzschaltung ist demnach als "T"-Schaltung ausgebildet.

Mittels der CLL-Resonanzschaltung, die durch den ersten Resonanzumrichter derart angesteuert wird, dass sie mit ihrer Resonanzfrequenz schwingt, ist es neben dem stromlosen Ein- und Ausschalten der vorzugsweise verwendeten ansteuerbaren bidirektionalen Leistungshalbleiterschalter des ersten Resonanzumrichters zudem möglich, die ansteuerbaren bidirektionalen Leistungshalbleiterschalter des ersten Resonanzumrichters auch spannungslos ein- und auszuschalten. Dadurch können die Schaltverluste der ansteuerbaren bidirektionalen Leistungshalbleiterschalter des ersten Resonanzumrichters weiter reduziert werden und eine verlustarme Umsetzung einer am Eingang des ersten Energiespeicherkreises anliegenden ersten Gleichspannung in eine am Ausgang des zweiten Energiespeicherkreises anliegende zweite Gleichspannung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Umrichterschaltung können gering gehalten werden, so dass sich vorteilhaft eine hohe Verfügbarkeit der Umrichterschaltung ergibt.

Das erfindungsgemässe Umrichtersystem bzw. die erfindungsgemässe Umrichtereinheit weisen mindestens zwei der vorstehend genannten erfindungsgemässen Umrichterschaltungen auf, wobei die der Umrichterschaltungen eingansseitig parallel oder seriell oder seriell und parallel miteinander verbunden sind. Das System ist demnach denkbar einfach aufgebaut, wobei mittels der eingansseitigen Parallelschaltung der ersten Energiespeicherkreise vorteilhaft ein grosser Eingangsgleichstrom möglich ist und damit eine erhöhte elektrische Energie übertragen werden kann. Die eingansseitige Serienschaltung der ersten Energiespeicherkreise wiederum ermöglicht eine hohe Eingangsgleichspannung und damit ebenfalls die Übertragung grosser elektrischer Energie.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform einer erfindungsgemässen Umrichterschaltung,
- Fig. 3: eine erste Ausführungsform eines erfindungsgemässen Umrichtersystems mit Umrichterschaltungen gemäss Fig. 2,
- Fig. 4: eine zweite Ausführungsform eines erfindungsgemässen Umrichtersystems mit Umrichterschaltungen gemäss Fig. 2,
- Fig. 5: eine dritte Ausführungsform eines erfindungsgemässen Umrichtersystems mit Umrichterschaltungen gemäss Fig. 2,
- Fig. 6: eine vierte Ausführungsform eines erfindungsgemässen Umrichtersystems mit Umrichterschaltungen gemäss Fig. 2 und
- Fig. 7: eine fünfte Ausführungsform eines erfindungsgemässen Umrichtersystems mit Umrichterschaltungen gemäss Fig. 2.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

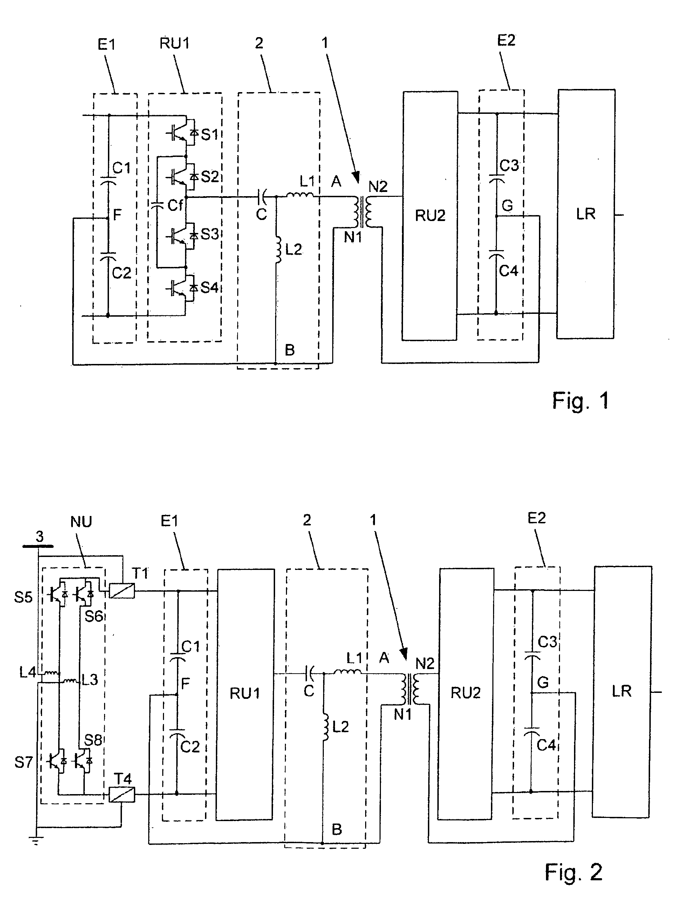

Die Beschreibung der dargestellten Ausführungsformen bezieht sich jeweils auf eine Lastflussrichtung die von der Primärseite N1 des Transformators 1 zu dessen Sekundärseite N2 verläuft. Fig. 1 zeigt eine erste Ausführungsform einer erfindungsgemässen Umrichterschaltung . Darin umfasst die Umrichterschaltung einen ersten Resonanzumrichter RU1 welcher eingangsseitig mit einem vorgeschalteten ersten Energiespeicherkreis E1 und ausgangsseitig mit einer, CLL-Resonanzschaltung 2 und der Primärwicklung N1 des Transformators 1 verbunden ist. Die Sekundärwicklung N2 des Transformators 1 ist mit der Eingangsseite des zweiten Resonanzumrichters RU1 verbunden. Der zweite Energiespeicherkreis E2 ist eingangsseitig mit der Ausgangsseite des zweiten Resonanzumrichters RU1 und ausgangsseitig mit dem Lastumrichter LR verbunden. Der erste Energiespeicherkreis E1 ist aus zwei in Reihe geschalteten Kapazitäten C1 und C2 gebildet, deren gemeinsamer Verbindungspunkt F mit der Primärwicklung N1 des Transformators 1 verbunden ist. Der zweite Energiespeicherkreis E2 ist ebenfalls aus zwei in Reihe geschalteten Kapazitäten C3 und C4 gebildet, deren gemeinsamer Verbindungspunkt G mit der Sekundärwicklung N2 des Transformators 1 verbunden ist. Der erste Resonanzumrichter RU1 kann wie in der Ausführungsform nach Fig. 1 gezeigt, als 3 Niveau-Umrichter in Halbbrückenkonfiguration, oder auch in einfacher Halbrückenkonfiguration, in einfacher Vollbrückenkonfiguration, in 3 Niveau-Vollbrückenkonfiguration, aber auch in jeder denkbaren und dem Fachmann bekannten anderen Ausführungsform ausgebildet sein. In der dem ersten Resonanzumrichter RU1 entsprechenden Weise kann der zweite Resonanzumrichter RU2 ausgebildet sein. Der Lastumrichter LR kann, in Ausführungsform nach Fig. 1 nicht explizit dargestellt, in jeder denkbaren und dem Fachmann bekannten Ausführungsform ausgebildet sein. Die CLL-Resonanzschaltung 2 ist mit dem ersten Resonanzumrichter RU1 und mit der Primärwicklung N1 des Transformators 1 verbundenen, , wobei die CLL-Resonanzschaltung 2 eine Resonanzkapazität C, eine erste und eine zweite Resonanzinduktivität L1, L2 aufweist.

Erfindungsgemäss ist nun die Resonanzkapazität C seriell mit der ersten Resonanzinduktivität L1 verbunden, wobei die erste Resonanzinduktivität L1 mit einem ersten Verbindungspunkt A der Primärwicklung N1 des Transformators 1 verbunden ist und die Resonanzkapazität C mit der Ausgangsseite des Resonanzumrichters 1 verbunden ist. Die zweite Resonanzinduktivität L2 ist mit dem Verbindungspunkt der Resonanzkapazität C mit der ersten Resonanzinduktivität L1 verbunden, wobei die zweite Resonanzinduktivität L2 mit einem zweiten Verbindungspunkt B der Primärwicklung N1 des Transformators 1 verbunden ist. Der zweite Verbindungspunkt B der Primärwicklung N1 des Transformators 1 ist mit dem Verbindungspunkt F des kapazitiven Energiespeicherkreises E1 verbunden. Die CLL-Resonanzschaltung 2 wird durch den ersten Resonanzumrichter RU1 vorzugsweise derart angesteuert, dass die CLL-Resonanzschaltung 2 mit ihrer Resonanzfrequenz schwingt. Dadurch ist es neben dem stromlosen Ein- und Ausschalten der vorzugsweise verwendeten ansteuerbaren bidirektionalen Leistungshalbleiterschalter des ersten Resonanzumrichters RU1 zudem möglich, die ansteuerbaren bidirektionalen Leistungshalbleiterschalter des ersten Resonanzumrichters RU1 auch spannungslos ein- und auszuschalten. Die Schaltverluste der ansteuerbaren bidirektionalen Leistungshalbleiterschalter des ersten Resonanzumrichters RU1 können damit weiter reduziert werden und eine verlustarme Umsetzung einer am Eingang des ersten Energiespeicherkreises E1 anliegenden ersten Gleichspannung in eine am Ausgang des zweiten Energiespeicherkreises E2anliegende zweite Gleichspannung ist vorteilhaft möglich. Durch die Verringerung der Schaltverluste verlängert sich die Lebensdauer der ansteuerbaren bidirektionalen Leistungshalbleiterschalter entsprechend und die Ausfallraten der Umrichterschaltung können gering gehalten werden, so dass sich vorteilhaft eine hohe Verfügbarkeit der Umrichterschaltung ergibt. Es hat sich als besonders vorteilhaft erwiesen, wenn die ansteuerbaren bidirektionalen Leistungshalbleiterschalter des ersten Resonanzumrichters RU1 im Betrieb mit einer Schaltfrequenz schalten, die der Resonanzfrequenz der CLL-Resonanzschaltung 2 entspricht, da dann beim stromlosen Ein- und Ausschalten der ansteuerbaren bidirektionalen Leistungshalbleiterschalter und beim spannungslosen Ein- und Ausschalten der ansteuerbaren bidirektionalen Leistungshalbleiterschalter besonders geringe Schaltverluste auftreten. Ist die Schaltfrequenz der ansteuerbaren bidirektionalen Leistungshalbleiterschalter höher als die Resonanzfrequenz, so können die durch die Schaltvorgänge der ansteuerbaren bidirektionalen Leistungshalbleiterschalter generierten Schwingungen sowohl an der Eingangsseite der Umrichterschaltung, d.h. am Eingang des ersten Energiespeicherkreises E1, als auch an der Ausgangsseite der Umrichterschaltung, d.h. am Ausgang des zweiten Energiespeicherkreises E2, in erwünschtem Maße gering gehalten werden, wobei die Schaltverluste der ansteuerbaren bidirektionalen Leistungshalbleiterschalter dabei nach wie vor gering sind.

Gemäß Fig. 1 ist der erste Resonanzumrichter RU1 mit der ersten Energiespeichereinheit E1 in Konfiguration einer Halbbrücke ausgebildet, bei der der Resonanzumrichter RU1 einen ersten, einen zweiten, einen dritten und einen vierten ansteuerbaren bidirektionalen Leistungshalbleiterschalter S1, S2, S3, S4 aufweist, wobei die ansteuerbaren bidirektionalen Leistungshalbleiterschalter S1, S2, S3, S4 seriell geschaltet sind. Eine Kapazität Cf des ersten Resonanzumrichters RU1 ist parallel zu den beiden Leistungshalbleiterschaltern S2 und S3 geschaltet und ist dadurch mit dem Verbindungspunkt welcher zum einen von den Leistungshalbleiterschaltern S1 und S2 gebildet wird und welcher zum anderen von den Leistungshalbleiterschaltern S3 und S4 gebildet wird, verbunden. Die Kapazität Cf bewirkt mit Vorteil eine Stabilisierung der Spannung an den ansteuerbaren bidirektionalen Leistungshalbleiterschalter S1, S2, S3, S4, welche insbesondere der Hälfte der über dem ersten und zweiten kapazitiven Energiespeicher C1, C2 anliegenden Spannung entspricht. Die Kapazität C1 des ersten kapazitiven Energiespeicher E1 ist mit dem ersten ansteuerbaren bidirektionalen Leistungshalbleiterschalter S1 verbunden und die zweite Kapazität C2 des ersten kapazitiven Energiespeicher E1 ist mit dem vierten ansteuerbaren bidirektionalen Leistungshalbleiterschalter S4 verbunden.

Verfahrensmässig wird bei der Umrichterschaltung gemäss Fig. 1 der erste, zweite, dritte vierte ansteuerbare bidirektionale Leistungshalbleiterschalter S1, S2, S3, S4 jeweils mittels eines Ansteuersignals angesteuert, wobei das Ansteuersignal nach Art einer Pulsweitenmodulation erzeugt wird. Die Schaltfrequenz der ansteuerbaren bidirektionalen Leistuhgshalbleiterschalter S1, S2, S3, S4 wird durch das Ansteuersignal bestimmt. Um die vorstehend bereits genannten Vorteile zu erreichen, ist das Ansteuersignal für den ersten ansteuerbaren bidirektionalen Leistungshalbleiterschalter S1 in Phase bezüglich des Trägersignals der Pulsweitenmodulation. Im Gegensatz dazu ist das Ansteuersignal für den zweiten ansteuerbaren bidirektionalen Leistungshalbleiterschalter S2 gegenphasig bezüglich des Trägersignals der Pulsweitenmodulation. Besonders vorteilhaft wird der Aussteuergrad des Ansteuersignals des ersten ansteuerbaren bidirektionalen Leistungshalbleiterschalters S1 und der Aussteuergrad des Ansteuersignals des zweiten ansteuerbaren bidirektionalen Leistungshalbleiterschalters S2 jeweils in der Grössenordnung 25% oder 75% gewählt. Als Ansteuersignal für den dritten ansteuerbaren bidirektionalen Leistungshalbleiterschalter S3 wird dann das komplementäre Ansteuersignal für den zweiten ansteuerbaren bidirektionalen Leistungshalbleiterschalter S2 gewählt und als Ansteuersignal für den vierten ansteuerbaren bidirektionalen Leistungshalbleiterschalter S2 wird das komplementäre Ansteuersignal für den zweiten ansteuerbaren bidirektionalen Leistungshalbleiterschalter S3 gewählt.

Fig. 2 zeigt ebenfalls eine Umrichterschaltung wie sie in Fig. 1 dargestellt ist, mit dem Unterschied, dass der erste Energiespeicherkreis E1 eingangsseitig mit einem Netzumrichter NU verbunden ist. Der Netzumrichter kann wie in der Ausführungsform nach Fig. 2 gezeigt, als einfache Vollbrückenkonfiguration, aber auch in jeder denkbaren und dem Fachmann bekannten anderen Ausführungsform ausgebildet sein. Der abgebildete Netzumrichter NU weist einen fünften, einen sechsten, einen siebten und eine achten ansteuerbaren bidirektionalen Leistuhgshalbleiterschalter S5, S6, S7, S8 auf, wobei jeweils die ansteuerbaren bidirektionalen Leistungshalbleiterschalter S5 und S7 miteinander und die ansteuerbaren bidirektionalen Leistungshalbleiterschalter S6 und S8 miteinander seriell geschaltet sind. Die beiden seriell miteinander verbundenen Paare von Leistungshalbleiterschalter S6, S8 und S5, S7 sind wiederum zueinander parallel geschaltet. Damit wird ein gemeinsamer Verbindungspunkte zwischen den Leistungshalbleiterschalter S5 und S7 sowie ein gemeinsamer Verbindungspunkt zwischen den Leistungshalbleiterschaltern S7 und S8 gebildet. Der Verbindungspunkt der Leistungshalbleiterschalter S6 und S8 ist über eine Induktivität L3 eingangsseitig mit einem Verbindungspunkt gebildet aus Erdpotential und einen Schalter T 4 verbunden. Der Verbindungspunkt der Leistungshalbleiterschalter S7 und S8 ist ausgangsseitig über den Schalter T4 mit der Eingangsseite des ersten Energiespeicherkreises E1 verbunden. Weiterhin ist der Verbindungspunkt der Leistungshalbleiterschalter S5 und S7 über eine Induktivität L4 eingangsseitig mit einem Verbindungspunkt gebildet aus dem elektrischem Versorgungsnetz (3) und dem Schalter T1 verbunden. Der Verbindungspunkt der Leistungshalbleiterschalter S5 und S6 ist ausgangsseitig über den Schalter T1 mit der ersten Kapazität C1 auf der Eingangsseite des ersten Energiespeicherkreises E1 verbunden. Mittels der Schalter T1 und T4 kann der Netzumrichter NU in der Umrichterschaltung zu- oder abgeschaltet werden.

Verfahrensmässig wird bei der Umrichterschaltung gemäss Fig. 2 der erste, zweite, dritte vierte ansteuerbare bidirektionale Leistungshalbleiterschalter S1, S2, S3, S4 jeweils mittels eines Ansteuersignals angesteuert, wobei das Ansteuersignal nach Art einer Pulsweitenmodulation erzeugt wird. Um die vorstehend bereits genannten Vorteile zu erreichen, ist das Ansteuersignal für den ersten ansteuerbaren bidirektionalen Leistungshalbleiterschalter S1 in Phase bezüglich des Trägersignals der Pulsweitenmodulation. Im Gegensatz dazu ist das Ansteuersignal für den vierten ansteuerbaren bidirektionalen Leistungshalbleiterschalter S4 gegenphasig bezüglich des Trägersignals der Pulsweitenmodulation. Besonders vorteilhaft wird der Aussteuergrad des Ansteuersignals des ersten ansteuerbaren bidirektionalen Leistungshalbleiterschalters S1 und der Aussteuergrad des Ansteuersignals des vierten ansteuerbären bidirektionalen Leistungshalbleiterschalters S4 jeweils in der Grössenordnung 25% oder 75% gewählt. Als Ansteuersignal für den zweiten ansteuerbaren bidirektionalen Leistungshalbleiterschalter S2 wird dann das komplementäre Ansteuersignal für den ersten ansteuerbaren bidirektionalen Leistungshalbleiterschalter S1 gewählt und als Ansteuersignal für den dritten ansteuerbaren bidirektionalen Leistungshalbleiterschalter S3 wird das komplementäre Ansteuersignal für den vierten ansteuerbaren bidirektionalen Leistungshalbleiterschalter S4 gewählt.

Denkbar ist es, dass allgemein die zweite Resonanzinduktivität L2 im Transformator 1 integriert ist. Denkbar ist aber auch, dass allgemein die erste Resonanzinduktivität L1 entweder zusätzlich oder alleine im Transformator 1 integriert ist. Durch diese Massnahmen kann Platz eingespart werden und Fertigung der Umrichterschaltung, insbesondere die Montage, vereinfacht sich.

Vorzugsweise ist der erste, zweite, dritte und vierte ansteuerbare bidirektionale Leistungshalbleiterschalter S1, S2, S3, S4 jeweils als ein integrierter über die Ansteuerelektrode kommutierter Thyristor (IGCT - Integrated Gate-Commutated Thyristor) mit einer zugehörigen parallel geschalteten Diode. Ein solcher Thyristor weist besonders geringe Wirkleistungsverluste bei gleichzeitig hoher Robustheit, vor allem bei hohen Spannungen und insbesondere bei Überspannungen, auf. Es ist aber auch denkbar, den ersten, zweiten, dritten und vierten ansteuerbaren bidirektionalen Leistungshalbleiterschalter S1, S2, S3, S4 jeweils als einen Bipolartransistor mit isoliert angeordneter Ansteuerelektrode (IGBT - Insulated Gate Bipolartransistor) mit einer zugehörigen parallel geschalteten Diode auszubilden. Ein solcher Transistor zeichnet sich durch eine hohe Schaltfrequenz und damit durch geringe Schwingungen im Strom und in der Spannung aus.

Die erfindungsgemässe Umrichtereinheit weist allgemein mindestens zwei der vorstehend genannten erfindungsgemässen Umrichterschaltungen auf, wobei die ersten Energiespeicher E1 der Umrichterschaltungen eingangsseitig parallel oder seriell miteinander verbunden sind. Die Einheit ist damit denkbar einfach aufgebaut, wobei mittels der eingangsseitigen Parallelschaltung der ersten Energiespeicher E1 vorteilhaft ein grosser Eingangsgleichstrom möglich ist und somit eine erhöhte elektrische Energie übertragen werden kann. Die eingangsseitige Serienschaltung der ersten Energiespeicher E1 wiederum ermöglicht eine hohe Eingangsgleichspannung und damit ebenfalls die Übertragung grosser elektrischer Energie. Weiterhin ist es ebenfalls möglich, zwei oder mehrere Umrichtereinheiten, welche eingangseitig die Parallelschaltung von ersten Energiespeichern E1 aufweisen in Serie zu einander zu schalten. Damit ergeben sich damit die Vorteile aus der Serien- und der Parallelschaltung, nämlich die Übertragung des grossen Eingangsgleichstromes und das Ermöglichen hoher Eingangsgleichspannungen.

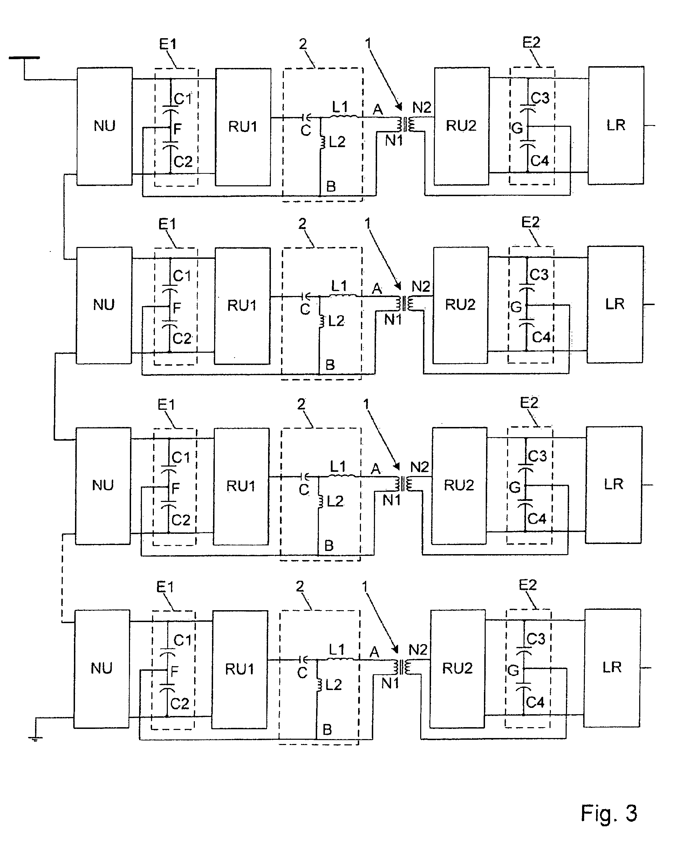

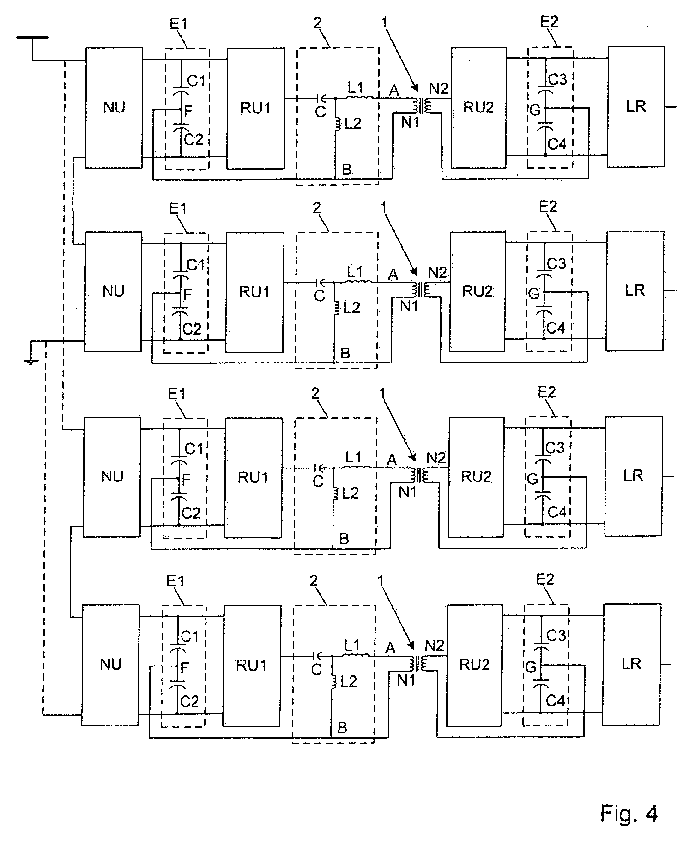

Das erfindungsgemässe Umrichtersystem wie in Fig. 3 dargestellt, weist allgemein mindestens zwei der vorher stehend genannten Umrichterschaltungen mit jeweils eingangsseitig verbunden Netzumrichtern NU auf. Die Netzumrichter NU des Umrichtersystems sind eingangsseitig seriell miteinander verbunden sind. Das Umrichtersystem ermöglicht damit eingangsseitig vorteilhaft einen grossen Eingangsspannung und somit die Übertragung einer erhöhten elektrischen Energie. Weiterhin ist es auch möglich statt der auf Eingangsseite seriell miteinander verbunden Netzumrichter NU diese parallel eingangsseitig miteinander zu verschalten. Dadurch wird es dem Umrichtersystem eingangsseitig ermöglicht, einen grossen Eingangsstrom zu verarbeiten und ebenfalls die Übertragung einer erhöhten elektrischen Energie zu erreichen. Wie das Fig. 4 dargestellte Umrichtersystem, ist auch eine Kombination aus serieller und paralleler eingangsseitiger Verschaltung von Umrichterschaltungen mit Netzumrichter NU möglich, Wie gezeigt, könne zwei Netzumrichter NU des Umrichtersystems, die eingangsseitig seriell miteinander verschaltet sind, eingangsseitig parallel zu zwei weitern ihrerseits seriell miteinander verschalteten Netzumrichtern NU geschaltet werden.

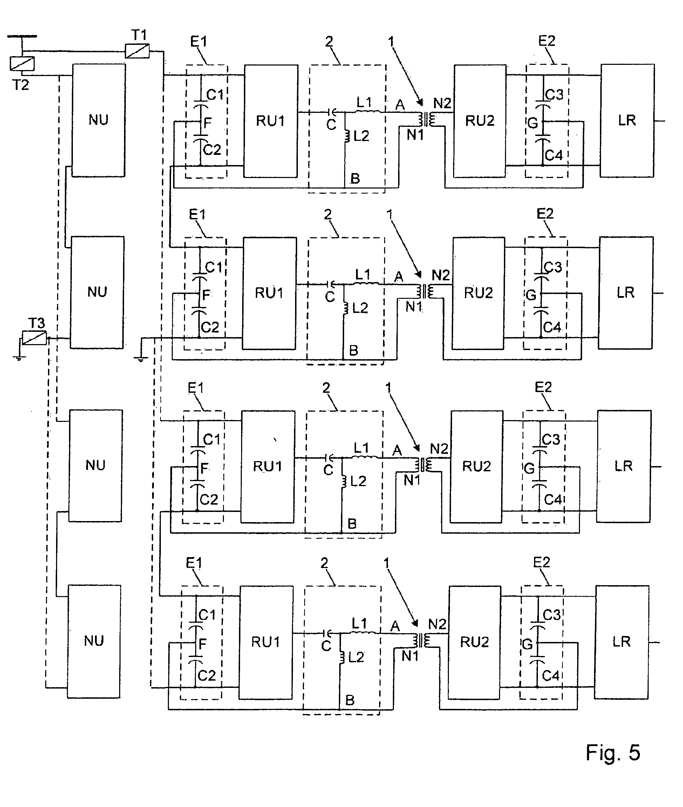

Fig. 5 zeigt das in Fig. 4 dargestellte erfindungsgemässe Umrichtersystem, welches sich die Vorteile aus sowohl seriell als auch parallel geschalteten Umrichterschaltungen mit jeweils eingangsseitig verbundenen Netzumrichter NU zu eigen macht und zusätzlich Schalter T1, T2, T3 aufweist. Mit den Schaltern T1, T2, T3 sind die Netzumrichter NU des Umrichtersystems in denkbarer Weise zu- und abschaltbar. Dadurch ist es in vorteilhafter Weise möglich bei einem Wechsel von einem elektrischen Versorgungsnetz welches beispielsweise eine Wechselspannung oder einen Wechselstrom in den Netzumrichter NU des Umrichtersystems einspeist auf ein anderes elektrisches Versorgungsnetz welches beispielsweise einen Gleichstrom, bzw. eine Gleichspannung liefert, zu wechseln und diese Gleichspannung bzw. diesen Gleichstrom mittels Betätigen der Schalter T1, T2, T3 direkt auf die Eingangsseite der ersten Energiespeicherkreise E1 zu legen.

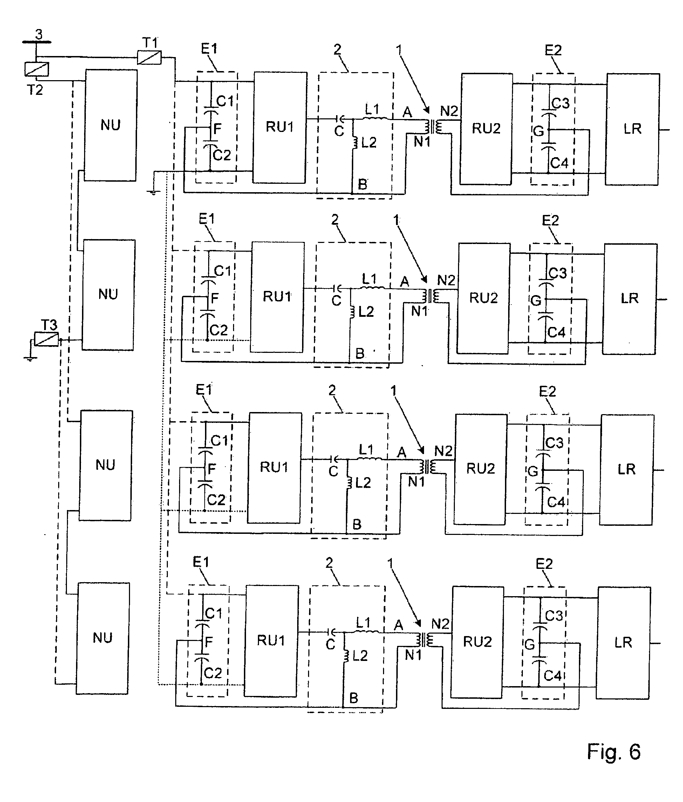

Fig. 6 zeigt ein ähnliches Umrichtersystem wie schon in Fig. 5 dargestellt, mit dem Unterschied, das mit dem Schalten der vier Netzumrichter NU durch Betätigen der Schalter T1, T2, T3 das elektrische Versorgungsnetz (3) von den Netzumrichtern NU direkt auf den Eingang der ersten Energiespeicherkreise E1 des Umrichtersystems schaltbar ist und wobei dann alle vier Umrichterschaltungen an der Eingangsseite der ersten Energiespeicherkreise E1 zueinander parallel geschaltet sind. Das in Fig.6 dargestellte Umrichtersystem ermöglicht in vorteilhafter Weise die Verarbeitung eines grossen Eingangsgleichspannungsstromes welcher an den ersten Energiespeicherkreisen E1 anliegt.

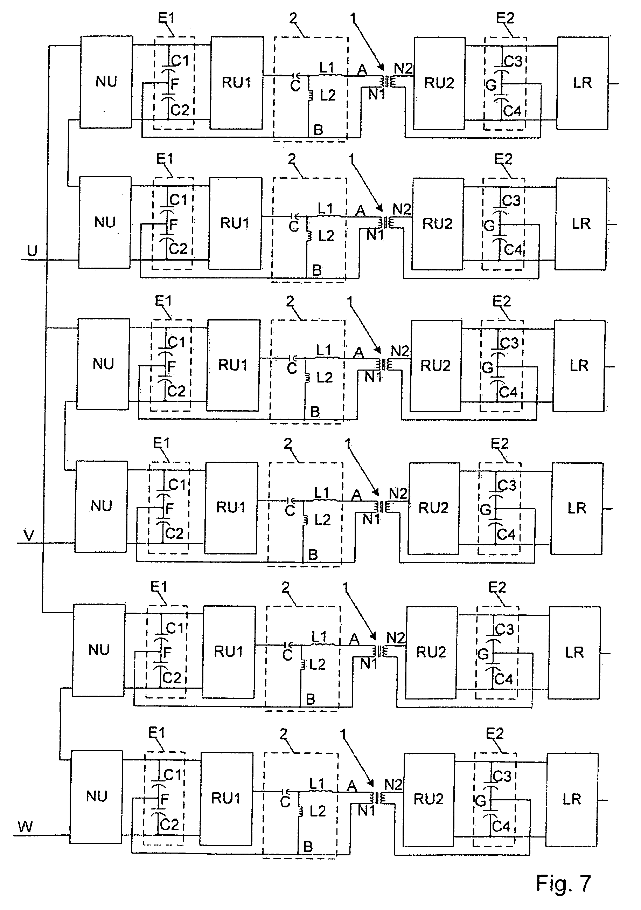

Fig. 7 zeigt ein erfindungsgemässes netzseitig dreiphasig ausgelegtes Umrichtersystem, bei welchem jeweils zwei der sechs dargestellten Umrichterschaltungen mit zugehörigem Netzumrichter NU in Serie geschaltet sind und jeweils mit einer Phase U, V, W des elektrischen Versorgungsnetzes (3) verbindbar sind. Somit lässt sich das Umrichtersystem vorteilhaft an ein dreiphasiges Versorgungsnetz anbinden und das Umrichtersystem ermöglicht auf Grund der seriell zueinander geschalteten Umrichterschaltungen hohe Eingangspannungen.

Weiterhin ist es sowohl bei der erfindungsgemässen Umrichtereinheit als auch bei dem erfindungsgemässen Umrichtersystem allgemein möglich, dass die Lastumrichter LR der Umrichtereinheiten ider der Umrichtersysteme ausgangsseitig parallel oder seriell miteinander verbunden sind. Mittels der ausgangsseitigen Parallelschaltung der Lastumrichter LR ist vorteilhaft ein grosser Ausgangsgleichstrom möglich. Die ausgangsseitige Serienschaltung der Lastumrichter LR wiederum ermöglicht eine hohe Ausgangsgleichspannung,

Die Netzumrichter NU in den erfindungsgemässen Umrichterschaltungen, Umrichtereinheiten und Umrichtersystemen können als AC/DC und/oder als DC/DC Wandler ausgeführt sein.

### Bezugszeichenliste

- A, B, F, G: Verbindungspunkt
- C: Resonanzkapazität
- C1,... C4: kapazitiver Energiespeicher
- E1, E2: Energiespeicherkreis
- NU: Netzumrichter
- L1, L2: Resonanzinduktivität
- L3, L4: Induktivität im Netzumrichter
- LR: Lastumrichter
- N1: Primärwicklung
- N2: Sekundärwicklung
- RU1, RU2: Resonanzumrichter
- T1,...T4: Mittel zum Schalten; Schaltmittel
- S1...S8: Leistungshalbleiterschalter
- 1: Transformator
- 2: CLL-Resonanzschaltung
- 3: elektrisches Versorgungsnetz

## Patentansprüche

1. Umrichterschaltung mit einen ersten Resonanzumrichter (RU1) welcher gleichspannungsseitig mit einem ersten Energiespeicherkreis (E1) verbunden ist, mit einem Transformator, einem zweiten Resonanzumrichter (RU2), welcher zweiter Resonanzumrichter (RU2)wechselspannungsseitig mit der Sekundärwicklung (N2) des Transformators (1) und gleichspannungsseitig mit einem Lastumrichter (LR) verbunden ist, und mit einer mit dem ersten Resonanzumrichter (RU1) und der Primärwicklung (N1) des Transformators (3) verbundenen CLL-Resonanzschaltung (2), welche CLL-Resonanzschaltung (2) eine Resonanzkapazität (C), eine erste und eine zweite Resonanzinduktivität (L1, L2) aufweist, **dadurch gekennzeichnet,**
**dass** die Resonanzkapazität (C) seriell mit der ersten Resonanzinduktivität (L1) verbunden ist, wobei die erste Resonanzinduktivität (L1) mit einem ersten Verbindungspunkt (A) der Primärwicklung (N1) des Transformators (1) verbunden ist und die Resonanzkapazität (C) mit dem ersten Resonanzumrichter (RU1) verbunden ist, und dass die zweite Resonanzinduktivität (L2) mit dem Verbindungspunkt der Resonanzkapazität (C) mit der ersten Resonanzinduktivität (L1) verbunden ist, wobei die zweite Resonanzinduktivität (L2) mit einem zweiten Verbindungspunkt (B) der Primärwicklung (N1) des Transformators (1) verbunden ist und der zweite Verbindungspunkt (B) der Primärwicklung (N1) des Transformators (1) mit dem ersten Resonanzumrichter (RU1) verbunden ist.

2. Umrichterschaltung nach Anspruch 1, **dadurch gekennzeichnet, dass** der erste Energiespeicherkreis (E1) einen ersten kapazitiven Energiespeicher (C1), einen zu dem ersten kapazitiven Energiespeicher (C1) seriell geschalteten zweiten kapazitiven Energiespeicher (C2), aufweist und wobei der zweite Verbindungspunkt (B) der Primärwicklung (N1) des Transformators (1) mit einem aus dem ersten Energiespeicher (C1) und dem zweiten Energiespeicher (C2) gebildeten Verbindungspunkt (F) des ersten Energiespeicherkreises (E1) verbunden ist.

3. Umrichterschaltung nach Anspruch 2, **dadurch gekennzeichnet, dass** der zweite Resonanzumrichter (RU2) gleichspannungsseitig mit einem zweiten Energiespeicherkreis (E2) verbunden ist, dass der zweite Energiespeicherkreis (E2) einen dritten kapazitiven Energiespeicher (C3), einen zu dem dritten kapazitiven Energiespeicher (C3) seriell geschalteten vierten kapazitiven Energiespeicher (C4), aufweist und wobei die Sekundärwicklung (N2) des Transformators (1) mit einem aus dem dritten Energiespeicher (C3) und dem vierten Energiespeicher (C4) gebildeten Verbindungspunkt (G) des zweiten Energiespeicherkreises (E2) verbunden ist.

4. Umrichterschaltung nach einem der Ansprüche 1 bis 3, **dadurch gekennzeichnet, dass** die zweite Resonanzinduktivität (L2) im Transformator (1) integriert ist.

5. Umrichterschaltung nach einem der Ansprüche 1 bis 4, **dadurch gekennzeichnet, dass** die erste Resonanzinduktivität (L1) im Transformator (1) integriert ist.

6. Umrichterschaltung nach einem der Ansprüche 1 bis 5, **dadurch gekennzeichnet, dass** Schaltmittel (T1, T2, T3, T4) vorhanden sind, mit denen ein Netzumrichter (NU) derart schaltbar ist, daß der Netzumrichter (NU) wechselspannungsseitig mit einem elektrischen Versorgungsnetz (3) und gleichspannungsseitig mit dem ersten Energiespeicherkreis (E1) verbunden ist.

7. Umrichterschaltungseinheit, **dadurch gekennzeichnet, dass**
mindestens zwei Umrichterschaltungen nach einem der Ansprüche 1 bis 5 vorgesehen sind und dass die Umrichterschaltungen eingansseitig seriell miteinander verbunden sind.

8. Umrichterschaltungseinheit, **dadurch gekennzeichnet, dass**
mindestens zwei Umrichterschaltungen nach einem der Ansprüche 1 bis 5 vorgesehen sind und dass die Umrichterschaltungen eingansseitig parallel miteinander verbunden sind.

9. Umrichterschaltungseinheit gemäss Anspruch 7, **dadurch gekennzeichnet, dass** mindestens zwei Umrichterschaltungseinheiten vorgesehen sind und dass die Umrichterschaltungseinheiten parallel miteinander verbunden sind.

10. Umrichterschaltungssystem, **dadurch gekennzeichnet, dass** mindestens zwei Umrichterschaltungen nach Anspruch 6 vorgesehen sind,
dass die Netzumrichter (NU) eingansseitig seriell miteinander verbunden sind.

11. Umrichterschaltungssystem gemäss Anspruch 10, **dadurch gekennzeichnet, dass** mindestens zwei Umrichterschaltungssysteme vorgesehen sind,
dass die Umrichterschaltungssysteme parallel miteinander verbunden sind.

12. Umrichterschaltungssystem gemäss Anspruch 11, **dadurch gekennzeichnet, dass** Schaltmittel (T1, T2, T3, T4) vorhanden sind, mit denen die Netzumrichter (NU) derart schaltbar sind, dass die Umrichterschaltungseinheit gemäss Anspruch 8 eingangsseitig mit dem elektrischen Versorgungsnetz (3) verbunden ist.

13. Umrichterschaltungssystem gemäss Anspruch 11, **dadurch gekennzeichnet, dass** Schaltmittel (T1, T2, T3, T4) vorhanden sind, mit denen die Netzumrichter (NU) derart schaltbar sind, das die Umrichterschaltungseinheit gemäss Anspruch 7 eingangsseitig mit dem elektrischen Versorgungsnetz (3)verbunden ist.

14. Umrichterschaltungssystem gemäss einem der Ansprüche 10 bis 13, **dadurch gekennzeichnet, dass** drei Umrichterschaltungssysteme vorhanden und miteinander verbunden sind, um mit einem dreiphasiges elektrisches Versorgungssnetz (3) verbunden zu werden.

## Claims

1. converter circuit having a first resonant converter (RU1) which is connected on the DC voltage side to a first energy storage circuit (E1), having a transformer, a second resonant converter (RU2), which second resonant converter (RU2) is connected on the AC voltage side to the secondary winding (N2) of the transformer (1) and on the DC voltage side to a load converter (LR), and having a CLL resonant circuit (2) which is connected to the first resonant converter (RU1) and to the primary winding (N1) of the transformer (3) and has a resonant capacitance (C), a first resonant inductance (L1) and a second resonant inductance (L2), **characterized in that** the resonant capacitance (C) is connected in series with the first resonant inductance (L1), with the first resonant inductance (L1) being connected to a first connection point (A) of the primary winding (N1) of the transformer (1) and the resonant capacitance (C) being connected to the first resonant converter (RU1), and **in that** the second resonant inductance (L2) is connected to the connection point of the resonant capacitance (C) to the first resonant inductance (L1), with the second resonant inductance (L2) being connected to a second connection point (B) of the primary winding (N1) of the transformer (1), and the second connection point (B) of the primary winding (N1) of the transformer (1) being connected to the first resonant converter (RU1).

2. Converter circuit according to Claim 1, **characterized in that** the first energy storage circuit (E1) has a first capacitive energy store (C1), and a second capacitive energy store (C2), which is connected in series with the first capacitive energy store (C1), and the second connection point (B) of the primary winding (N1) of the transformer (1) being connected to a connection point (F) of the first energy storage circuit (E1), which connection point (F) is formed from the first energy store (C1) and the second energy store (C2).

3. Converter circuit according to Claim 2, **characterized in that** the second resonant converter (RU2) is connected on the DC voltage side to a second energy storage circuit (E2), **in that** the second energy storage circuit (E2) has a third capacitive energy store (C3), and a fourth capacitive energy store (C4) which is connected in series with the third capacitive energy store (C3), and with the secondary winding (N2) of the transformer (1) being connected to a connection point (G) of the second energy storage circuit (E2), which connection point (G) is formed from the third energy store (C3) and the fourth energy store (C4).

4. Converter circuit according to one of Claims 1 to 3, **characterized in that** the second resonant inductance (L2) is integrated in the transformer (1).

5. Converter circuit according to one of Claims 1 to 4, **characterized in that** the first resonant inductance (L1) is integrated in the transformer (1).

6. Converter circuit according to one of Claims 1 to 5, **characterized in that** switching means (T1, T2, T3, T4) are provided, by means of which a mains converter (NU) can be switched such that the mains converter (NU) is connected on the AC voltage side to an electrical power supply system (3), and is connected on the DC voltage side to the first energy storage circuit (E1 ) .

7. Converter circuit unit, **characterized in that** at least two converter circuits according to one of Claims 1 to 5 are provided, and **in that** the converter circuits are connected in series with one another on the input side.

8. Converter circuit unit, **characterized in that** at least two converter circuits according to one of Claims 1 to 5 are provided, and **in that** the converter circuits are connected in parallel with one another on the input side.

9. Converter circuit unit according to Claim 7, **characterized in that** at least two converter circuit units are provided, and **in that** the converter circuit units are connected in parallel with one another.

10. Converter circuit system, **characterized in that** at least two converter circuits according to Claim 6 are provided,
**in that** the mains converters (NU) are connected in series with one another on the input side.

11. Converter circuit system according to Claim 10, **characterized in that** at least two converter circuit systems are provided,
and **in that** the converter circuit systems are connected in parallel with one another.

12. Converter circuit system according to Claim 11, **characterized in that** switching means (T1, T2, T3, T4) are provided, by means of which the mains converters (NU) can be switched such that the converter circuit unit according to Claim 8 is connected to the electrical power supply system (3) on the input side.

13. Converter circuit system according to Claim 11, **characterized in that** switching means (T1, T2, T3, T4) are provided, by means of which the mains converters (NU) can be switched such that the converter circuit unit according to Claim 7 is connected to the electrical power supply system (3) on the input side.

14. Converter circuit system according to one of Claims 10 to 13, **characterized in that** three converter circuit systems are provided and are connected to one another, in order to be connected to a three-phase electrical power supply system (3).

## Revendications

1. Circuit convertisseur comportant un premier convertisseur à résonance (RU1) qui est relié du côté de tension continue avec un premier circuit accumulateur d'énergie (E1), comportant un transformateur, un deuxième convertisseur à résonance (RU2), lequel deuxième convertisseur à résonance (RU2) est relié du côté de tension alternative avec l'enroulement secondaire (N2) du transformateur (1) et du côté de tension continue avec un convertisseur à charge (LR), et comportant un circuit à résonance CLL (2) relié avec le premier convertisseur à résonance (RU1) et l'enroulement primaire (N1) du transformateur (3), lequel circuit à résonance CLL (2) présente une capacité de résonance (C), une première et une deuxième inductance de résonance (L1, L2), **caractérisé en ce que**
la capacité de résonance (C) est reliée en série avec la première inductance de résonance (L1), la première inductance de résonance (L1) étant reliée avec un premier point de liaison (A) de l'enroulement primaire (N1) du transformateur (1) et la capacité de résonance (C) étant reliée avec le premier convertisseur à résonance (RU1), et **en ce que** la deuxième inductance de résonance (L2) est reliée avec le point de liaison de la capacité de résonance (C) avec la première inductance de résonance (L1), la deuxième inductance de résonance (L2) étant reliée avec un deuxième point de liaison (B) de l'enroulement primaire (N1) du transformateur (1) et le deuxième point de liaison (B) de l'enroulement primaire (N1) du transformateur (1) étant relié avec le premier convertisseur à résonance (RU1).

2. Circuit convertisseur selon la revendication 1, **caractérisé en ce que** le premier circuit accumulateur d'énergie (E1) présente un premier accumulateur d'énergie (C1) capacitif, un deuxième accumulateur d'énergie (C2) capacitif branché en série au premier accumulateur d'énergie (C1) capacitif et dans lequel le deuxième point de liaison (B) de l'enroulement primaire (N1) du transformateur (1) est relié avec un point de liaison (F) du premier circuit accumulateur d'énergie (E1) formé par le premier accumulateur d'énergie (C1) et le deuxième accumulateur d'énergie (C2).

3. Circuit convertisseur selon la revendication 2, **caractérisé en ce que** le deuxième convertisseur à résonance (RU2) est relié du côté de tension continue avec un deuxième circuit accumulateur d'énergie (E2), **en ce que** le deuxième circuit accumulateur d'énergie (E2) présente un troisième accumulateur d'énergie (C3) capacitif, un quatrième accumulateur d'énergie (C4) capacitif branché en série au troisième accumulateur d'énergie (C3) capacitif et dans lequel l'enroulement secondaire (N2) du transformateur (1) est relié avec un point de liaison (G) du deuxième circuit accumulateur d'énergie (E2) formé par le troisième accumulateur d'énergie (C3) et le quatrième accumulateur d'énergie (C4).

4. Circuit convertisseur selon une des revendications 1 à 3, **caractérisé en ce que** la deuxième inductance de résonance (L2) est intégrée dans le transformateur (1).

5. Circuit convertisseur selon une des revendications 1 à 4, **caractérisé en ce que** la première inductance de résonance (L1) est intégrée dans le transformateur (1).

6. Circuit convertisseur selon une des revendications 1 à 5, **caractérisé en ce que** des moyens de commutation (T1, T2, T3, T4) sont présents, avec lesquels un convertisseur réseau (NU) peut être commuté de telle sorte que le convertisseur réseau (NU) est relié du côté de tension alternative avec un réseau d'alimentation électrique (3) et du côté de tension continue avec le premier circuit accumulateur d'énergie (E1).

7. Unité de circuit convertisseur, **caractérisée en ce que**
au moins deux circuits convertisseurs selon une des revendications 1 à 5 sont prévus et **en ce que** les circuits convertisseurs sont reliés en série les uns aux autres du côté de l'entrée.

8. Unité de circuit convertisseur, **caractérisée en ce que**
au moins deux circuits convertisseurs selon une des revendications 1 à 5 sont prévus et **en ce que** les circuits convertisseurs sont reliés en parallèle les uns aux autres du côté de l'entrée.

9. Unité de circuit convertisseur selon la revendication 7, **caractérisée en ce que** au moins deux unités de circuits convertisseurs sont prévues et **en ce que** les unités de circuits convertisseurs sont reliées en parallèle les unes aux autres.

10. Système de circuit convertisseur, **caractérisé en ce que** au moins deux circuits convertisseurs selon la revendication 6 sont prévus, **en ce que** les convertisseurs réseaux (NU) sont reliés en série les uns aux autres du côté de l'entrée.

11. Système de circuit convertisseur selon la revendication 10, **caractérisé en ce que** au moins deux systèmes de circuits convertisseurs sont prévus, **en ce que** les systèmes de circuits convertisseurs sont reliés en parallèle les uns aux autres.

12. Système de circuit convertisseur selon la revendication 11, **caractérisé en ce que** des moyens de commutation (T1, T2, T3, T4) sont présents, avec lesquels les convertisseurs réseaux (NU) peuvent être commutés de telle sorte que l'unité de circuit convertisseur selon la revendication 8 soit reliée du côté de l'entrée avec le réseau d'alimentation électrique (3).

13. Système de circuit convertisseur selon la revendication 11, **caractérisé en ce que** des moyens de commutation (T1, T2, T3, T4) sont présents, avec lesquels les convertisseurs réseaux (NU) peuvent être commutés de telle sorte que l'unité de réseau convertisseur selon la revendication 7 soit reliée du côté de l'entrée avec le réseau d'alimentation électrique (3).

14. Système de circuit convertisseur selon une des revendications 10 à 13, **caractérisé en ce que** trois systèmes de circuits convertisseurs sont présents et reliés les uns aux autres, pour être reliés avec un réseau d'alimentation électrique (3) triphasé.
